# FASCICULE DE BREVET EUROPEEN

(11) **EP 1 882 815 B1**
(45) Date de publication et mention de la délivrance du brevet: **12.08.2009**
(21) Numéro de dépôt: 07290765.2
(22) Date de dépôt: 20.06.2007
(51) Int. Cl.: F01D 5/12, F01D 5/08, F01D 5/04

(54) **Turbomachine comprenant un système de refroidissement de la face aval d'un rouet de compresseur centrifuge**
Strömungsmaschine mit einem Kühlsystem für die Rückseite eines Zentrifugalverdichterrads
Turbomachine comprising a system for cooling the downstream face of a centrifugal compressor impeller

(30) Priorité: 19.07.2006 FR 0606544
(43) Date de publication de la demande: 30.01.2008
(73) Titulaire: SNECMA, 75015 Paris (FR)
(72) Inventeur: Behaghel, Laurent, 91230 Montgeron (FR); Mourlan, Jean-Pierre André Joseph, 94130 Nogent sur Marne (FR); Stangalini, Gérard Jacques, 77150 Fontainebleau (FR)
(74) Mandataire: Ramey, Daniel

(56) Documents cités:
- EP-A1- 0 961 033
- GB-A- 2 401 912
- US-A- 5 156 522
- US-A- 5 555 721
- US-A1- 2001 047 651

## Description

La présente invention concerne un système de refroidissement de la face aval d'un rouet de compresseur centrifuge dans une turbomachine telle notamment qu'un turboréacteur ou un turbopropulseur d'avion.

Dans une turbomachine dont le dernier étage du compresseur est du type centrifuge, un ensemble diffuseur - redresseur est agencé en sortie de l'étage centrifuge et alimente en air une chambre annulaire de combustion.

Le diffuseur comporte un flasque annulaire aval qui est relié à son extrémité aval à des moyens d'injection d'air dans un circuit de ventilation d'une turbine située en aval de la chambre de combustion. Une partie du débit d'air sortant du redresseur contourne la chambre de combustion par l'intérieur, en passant entre une paroi radialement interne de la chambre et le flasque du diffuseur, pour alimenter ces moyens d'injection d'air de ventilation de la turbine.

Une cavité annulaire est délimitée en aval du rouet de l'étage centrifuge par le flasque annulaire du diffuseur et doit être ventilée, par prélèvement d'air en sortie de l'étage centrifuge, pour éviter une augmentation de température de la face aval du rouet qui serait susceptible de dépasser la température maximale admissible par le matériau du rouet, l'air présent dans la cavité étant entraîné par le rouet et échauffé par frottement visqueux.

Pour réduire l'échauffement de la face aval du rouet, on a proposé d'augmenter le débit d'air prélevé en sortie de l'étage centrifuge pour mieux ventiler la cavité aval du rouet. Cependant, cela se traduit par une augmentation des débits d'air non travaillant dans la turbomachine et dégrade ses performances.

On a ainsi proposé de monter sur la face aval du rouet un bouclier annulaire de protection thermique. Cependant, la fixation de ce bouclier sur le rouet est complexe et entraîne une augmentation de la masse et de l'inertie en rotation du rouet, ce qui diminue les performances de la turbomachine.

Pour éviter que la température du rouet ne dépasse une valeur maximale admissible, qui est de l'ordre de 500°C environ pour un rouet réalisé en titane, on est amené à limiter la vitesse de rotation du rouet ce qui a pour conséquence de diminuer le taux de compression de l'air et les performances de la turbomachine.

US-A-5 555 721 divulgue une turbomachine avec les caractéristiques du préambule de la revendication 1.

L'invention a notamment pour but d'apporter une solution simple, efficace et économique à ces problèmes, liés à la ventilation de la cavité aval du rouet d'un compresseur centrifuge dans une turbomachine, sans entraîner de diminution des performances de la turbomachine.

Elle propose à cet effet une turbomachine comprenant un ensemble diffuseur - redresseur agencé en sortie du rouet d'un compresseur centrifuge et alimentant en air une chambre annulaire de combustion et des moyens d'injection d'air de ventilation d'une turbine, cet ensemble diffuseur-redresseur comportant un flasque annulaire aval relié à son extrémité aval aux moyens d'injection et délimitant avec la face aval du rouet une cavité annulaire de circulation d'air de ventilation prélevé en sortie du compresseur, caractérisée en ce qu'elle comprend des moyens de prélèvement, sur les moyens d'injection, d'une fraction du débit d'air de ventilation de la turbine, et des moyens de guidage de l'air prélevé jusqu'à la partie radialement interne de la face aval du rouet, pour que cet air circule radialement de l'intérieur vers l'extérieur le long de la face aval du rouet et se mélange à l'air prélevé en sortie du compresseur afin de diminuer la température de l'air dans la cavité annulaire.

L'air de ventilation prélevé au niveau des moyens d'injection du circuit de ventilation de la turbine est guidé jusqu'à la face aval du rouet et vient lécher cette face aval, puis est mélangé dans la cavité aval du rouet à l'air prélevé en sortie du compresseur, ce qui diminue la température de l'air dans cette cavité. Ce refroidissement du rouet permet d'avoir un taux de compression de l'air supérieur à celui de la technique antérieure. De plus, l'air de refroidissement de la face aval du rouet est prélevé sur les moyens d'injection d'air dans le circuit de ventilation de la turbine, ce qui permet de ne pas diminuer les débits d'air travaillant et donc de préserver les performances de la turbomachine.

Dans un mode de réalisation de l'invention, les moyens de prélèvement débouchent dans un passage annulaire formé autour de l'arbre du compresseur entre les moyens d'injection d'air et la cavité annulaire.

Les moyens de prélèvement comprennent avantageusement un joint à labyrinthe qui est monté entre l'arbre du compresseur et la sortie des moyens d'injection et qui règle le débit d'air entrant dans le passage annulaire. Le passage annulaire peut également comporter en sortie un joint à labyrinthe pour le réglage du débit d'air venant de ce passage annulaire et entrant dans la cavité aval du rouet.

Selon une variante de réalisation de l'invention, les moyens d'injection comprennent une entrée alimentée en air par l'ensemble diffuseur - redresseur et deux sorties axialement opposées, dont l'une débouche dans le circuit de ventilation de la turbine et dont l'autre débouche dans la cavité annulaire.

Avantageusement, la cavité aval du rouet comprend des moyens de séparation et de mélange du débit d'air prélevé sur les moyens d'injection d'air pour la ventilation de la turbine et du débit d'air prélevé en sortie du compresseur. Ces moyens de séparation et de mélange comprennent par exemple une tôle cylindrique qui s'étend vers l'amont depuis une paroi aval délimitant la cavité et qui se termine à distance de la face aval du rouet.

L'invention sera mieux comprise et d'autres détails, caractéristiques et avantages de la présente invention apparaîtront à la lecture de la description suivante faite à titre d'exemple non limitatif et en référence aux dessins annexés, dans lesquels :
- la figure 1 est une demi-vue schématique partielle en coupe axiale d'un mode de réalisation du système de refroidissement selon l'invention ;
- la figure 2 est une demi-vue schématique partielle en coupe axiale d'une variante de réalisation de l'invention.

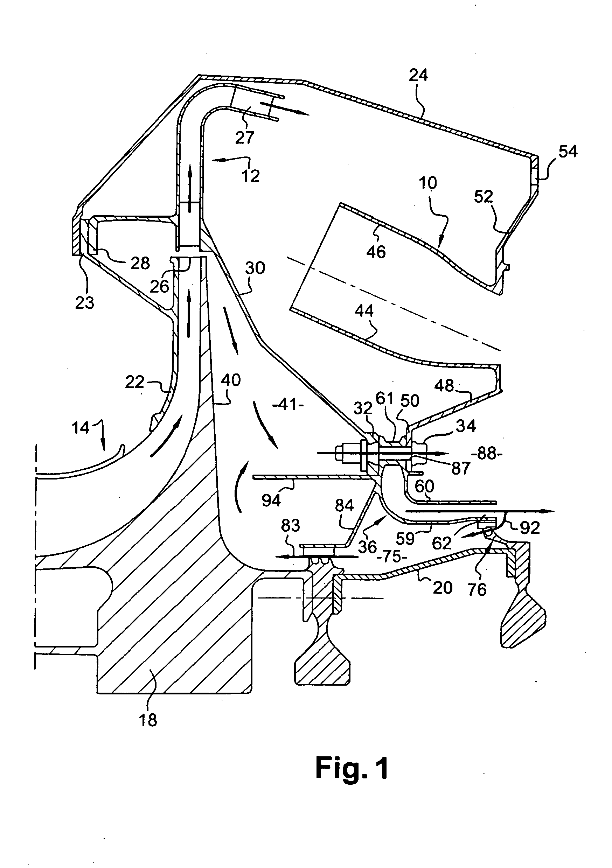

La figure 1 représente une partie d'une turbomachine, telle qu'un turboréacteur ou un turbopropulseur d'avion, comprenant d'amont en aval, dans le sens de l'écoulement des gaz à l'intérieur de la turbomachine, un étage centrifuge de compresseur 14, un ensemble diffuseur - redresseur annulaire 12 et une chambre de combustion 10.

L'étage de compresseur centrifuge 14 comprend un rouet 18 relié une partie d'arbre 20, et un stator 22 relié par une bride annulaire amont 23 à un carter externe 24 de la turbomachine qui s'étend autour du compresseur 14, du diffuseur 12 et de la chambre de combustion 10.

La sortie 26 du compresseur est orientée radialement vers l'extérieur et alignée avec l'entrée du diffuseur 12, la sortie du compresseur 14 étant séparée de l'entrée du diffuseur 12 par un faible jeu radial. Le diffuseur 12 a une forme annulaire coudée et est raccordée au redresseur 27 qui débouche radialement à l'extérieur de l'entrée de la chambre de combustion 10.

Le diffuseur 12 comprend une bride annulaire amont 28 fixée par des moyens appropriés du type vis-écrou au carter externe 24, la bride 23 du stator du compresseur étant serrée axialement entre le carter externe 24 et la bride 28 du diffuseur.

Le diffuseur 12 comporte également un flasque annulaire 30 qui s'étend vers l'aval et vers l'intérieur depuis l'entrée du diffuseur et qui se termine à son extrémité aval par une bride annulaire interne 32 fixée par des moyens 34 du type vis-écrou ou analogues sur des moyens 36 d'injection d'air dans un circuit de ventilation d'une turbine (non représentée) située en aval de la chambre de combustion 10.

Le flasque 30 du diffuseur délimite avec une face radiale aval 40 du rouet une cavité annulaire 41 qui est ventilée par de l'air prélevé à la sortie du compresseur 14 à travers le jeu radial précité.

La chambre de combustion 10 comprend une paroi de révolution interne 44 et une paroi de révolution externe 46 s'étendant l'une à l'intérieur de l'autre. La paroi interne 44 est reliée à son extrémité aval à une extrémité radialement externe d'une virole tronconique 48 dont l'extrémité radialement interne comporte une bride annulaire interne 50 fixée sur les moyens d'injection 36 précités. La paroi externe 46 de la chambre est reliée à son extrémité aval à une extrémité radialement interne d'une virole tronconique 52 qui comporte à son extrémité radialement externe une bride annulaire externe 54 de fixation sur le carter externe 24.

Une partie de l'air sortant du redresseur 27 pénètre dans la chambre 10 et est mélangée à du carburant amené par des injecteurs (non représentés), ce mélange étant ensuite brûlé et injecté dans la turbine pour entraîner en rotation l'arbre 20. Une autre partie de l'air provenant du redresseur 27 contourne la chambre 10 et passe entre la paroi radialement interne 44 de la chambre et le flasque 30 du diffuseur pour alimenter les moyens d'injection 36.

Dans l'exemple représenté en figure 1, les moyens d'injection 36 comprenant deux parois 59, 60 coaxiales à section sensiblement en L qui s'étendent l'une à l'intérieur de l'autre et définissent un canal annulaire coudé à angle droit. L'entrée 61 du canal est orientée vers l'extérieur, et sa sortie 62 est orientée axialement et débouche à son extrémité aval pour l'alimentation en air de la turbine.

Un passage cylindrique annulaire 75 est formé entre les moyens d'injection 36 et l'arbre 20 et s'étend de la sortie 62 des moyens d'injection 36 jusque dans la cavité 41 en aval du rouet. Ce passage 75 comporte un premier joint à labyrinthe 76 monté entre l'arbre 20 et la sortie 62 des moyens d'injection 36, et un second joint à labyrinthe 83 monté en amont du joint 76, entre l'arbre 20 et une tôle annulaire 84 s'étendant vers l'amont et vers l'intérieur depuis les moyens d'injection 36.

Des orifices axiaux 87 de passage d'air sont formés, entre les moyens de fixation 34, sur les brides 32 et 50 du flasque 30 du diffuseur et de la virole 48, respectivement, et sont alignés avec des orifices correspondants formés dans les parois de révolution 59, 60 des moyens d'injection 36. Ces orifices 87 relient la cavité aval 41 du rouet à une enceinte annulaire 88 d'évacuation de l'air, située en aval des moyens d'injection et délimitée par la virole 48 et la paroi externe 60 des moyens d'injection 36.

L'air sortant du compresseur centrifuge 14 circule dans la cavité 41 aval du rouet de l'extérieur vers l'intérieur et s'échauffe par frottement visqueux sur la face aval 40 du rouet.

Selon l'invention, une fraction du débit d'air de ventilation de la turbine est prélevée en sortie des moyens d'injection 36 et guidée dans le passage 75 jusqu'à la cavité 41 pour refroidir la face aval 40 du rouet et diminuer la température de l'air dans la cavité 41.

Les joints à labyrinthe 76 et 83 sont réglés pour définir un débit d'air 92 circulant dans le passage 75.

L'air qui sort du joint à labyrinthe 83 circule le long de la face aval 40 du rouet, radialement de l'intérieur vers l'extérieur, puis est mélangé à l'air prélevé en sortie du compresseur centrifuge 10. Ce mélange d'air passe ensuite dans l'enceinte 88 à travers les orifices axiaux 87 des brides 32, 50 et des moyens d'injection 36.

Pour séparer le débit d'air 92 prélevé en sortie des moyens d'injection 36 et le débit d'air prélevé en sortie du compresseur centrifuge et pour permettre le mélange de ces débits après passage du débit d'air 92 sur la face aval 40 du rouet, une tôle cylindrique 94 est montée dans la cavité 41 et s'étend axialement vers l'amont depuis les moyens d'injection 36 jusqu'au voisinage de la face aval 40 du rouet. Cette tôle 94 est située radialement entre la rangée annulaire d'orifices 87 de passage d'air des moyens d'injection 36 et le joint à labyrinthe 83. L'air qui sort de ce joint est guidé par la tôle 94 jusqu'à la face aval 40 du rouet, puis se mélange à l'air prélevé en sortie du rouet.

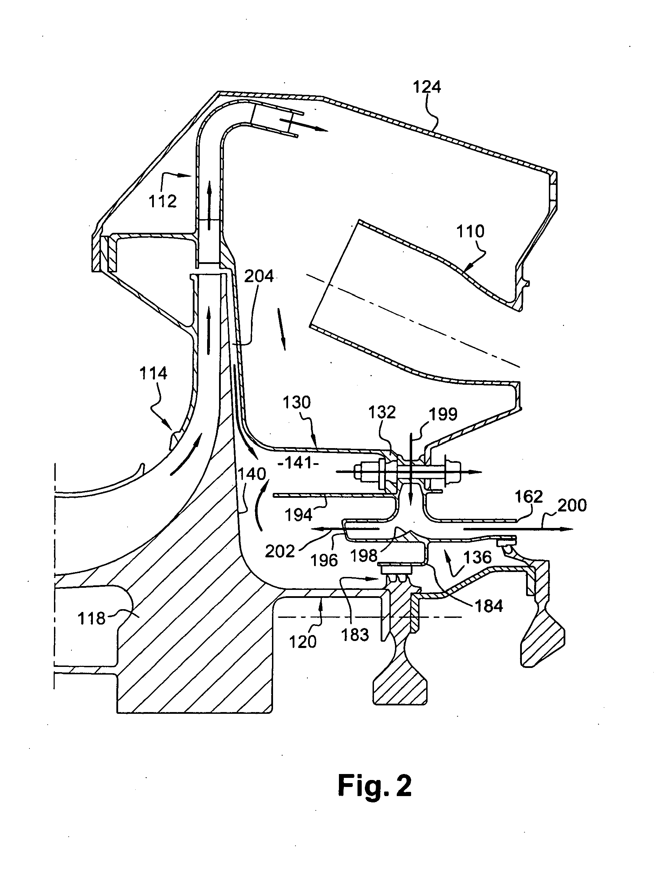

On a représenté une variante de réalisation de l'invention en figure 2, dans laquelle les éléments déjà décrits en référence à la figure 1 sont désignés par les mêmes chiffres augmentés d'une centaine.

Dans cette variante, les moyens d'injection 136 sont à double sortie et comportent un canal annulaire à section en T dans lequel une seconde partie cylindrique axiale de sortie 196 est raccordée à son extrémité aval à l'extrémité amont de la première partie axiale de sortie 162. Cette seconde sortie 196 débouche vers l'amont et est située radialement entre la tôle cylindrique 194 de guidage et la tôle 184 de montage du joint d'étanchéité amont 183, et sa section de passage d'air est, dans l'exemple représenté, sensiblement identique à celle de la première sortie 162 des moyens d'injection 136.

Des moyens 198 de séparation de flux sont prévus dans le canal annulaire des moyens d'injection 136 pour diviser le débit d'air 199 pénétrant dans le canal annulaire en deux débits d'air 200, 202 alimentant respectivement la turbine et la cavité aval du rouet 118. Ces moyens 198 comprennent une nervure annulaire qui est formée en saillie sur une surface cylindrique interne des moyens d'injection 36 et qui s'étend dans un plan perpendiculaire à l'axe longitudinal des moyens d'injection 136 et passant par leur entrée 160.

Dans l'exemple représenté, le flasque 130 du diffuseur est en forme de L en section axiale et comprend une partie amont qui s'étend sensiblement radialement, en aval et à faible distance de la face aval 140 du rouet du compresseur, et une partie aval sensiblement cylindrique qui se termine à son extrémité aval par la bride annulaire 132 de fixation sur les moyens d'injection 136. La partie cylindrique du flasque 130 s'étend sensiblement parallèlement à la tôle 194 et délimite la cavité aval 141 du rouet qui communique avec la sortie du compresseur par un passage radial 204 de faible dimension axiale formé entre le rouet 118 et la partie radiale du flasque 130.

L'air qui s'écoule dans le passage radial 204, de l'extérieur vers l'intérieur, pénètre dans la cavité aval 141 et se mélange à l'air provenant de la seconde sortie 196 des moyens d'injection et qui s'écoule d'aval en amont le long de la tôle 194 pour venir lécher la face aval du rouet.

## Revendications

1. Turbomachine, comprenant un ensemble diffuseur - redresseur (12) agencé en sortie du rouet (18) d'un compresseur centrifuge et alimentant en air une chambre annulaire (10) de combustion et des moyens (36) d'injection d'air de ventilation d'une turbine, cet ensemble diffuseur-redresseur comportant un flasque annulaire aval (30) relié à son extrémité aval aux moyens d'injection et délimitant avec la face aval (40) du rouet une cavité annulaire (41) de circulation d'air de ventilation prélevé en sortie du compresseur, **caractérisée en ce qu'**elle comprend des moyens de prélèvement (198), sur les moyens d'injection (36), d'une fraction du débit d'air de ventilation de la turbine, et des moyens de guidage (94,194) de l'air prélevé jusqu'à la partie radialement interne de la face aval (40) du rouet, pour que cet air circule radialement de l'intérieur vers l'extérieur le long de la face aval du rouet et se mélange à l'air prélevé en sortie du compresseur afin de diminuer la température de l'air dans la cavité annulaire (41).

2. Turbomachine selon la revendication 1, **caractérisée en ce que** les moyens de prélèvement débouchent dans un passage annulaire (75) formé autour de l'arbre (20) du compresseur entre les moyens (36) d'injection d'air et la cavité annulaire (41).

3. Turbomachine selon la revendication 2, **caractérisée en ce que** les moyens de prélèvement comprennent un joint à labyrinthe (76) qui est monté entre l'arbre (20) du compresseur et la sortie (62) des moyens d'injection (36) et qui règle le débit d'air entrant dans le passage annulaire (75).

4. Turbomachine selon la revendication 2 ou 3, **caractérisée en ce que** le passage annulaire (75) comporte en sortie un joint à labyrinthe (83) pour le réglage du débit d'air venant de ce passage annulaire et entrant dans la cavité annulaire (41).

5. Turbomachine selon la revendication 1, **caractérisée en ce que** les moyens d'injection (136) comprennent une entrée alimentée en air par l'ensemble diffuseur - redresseur (12) et deux sorties (162, 196) axialement opposées, dont l'une débouche dans un circuit de ventilation de la turbine et dont l'autre débouche dans la cavité annulaire (141).

6. Turbomachine selon l'une des revendications précédentes, **caractérisée en ce que** la cavité annulaire (41, 141) comprend des moyens (94, 194) de séparation et de mélange du débit d'air prélevé sur les moyens (36, 136) d'injection d'air pour la ventilation de la turbine et du débit d'air prélevé en sortie du compresseur.

7. Turbomachine selon la revendication 6, **caractérisée en ce que** les moyens de séparation et de mélange comprennent une tôle cylindrique (94, 194) qui s'étend vers l'amont depuis une paroi aval délimitant la cavité et qui se termine à distance de la face aval (40, 140) du rouet.

## Claims

1. A turbomachine, comprising a diffuser - distributor assembly (12) arranged at the outlet of the impeller (18) of a centrifugal compressor and supplying an annular combustion chamber (10) with air and means (36) for injecting air for ventilating a turbine, this diffuser - distributor assembly comprising an annular downstream endpiece (30) connected at its downstream end to the injection means and delimiting, with the downstream face (40) of the impeller, an annular cavity (41) for the circulation of ventilation air taken from the outlet of the compressor, which comprises means (198) for drawing off from the injection means (36), a fraction of said turbine ventilation airflow, and means (94, 194) for guiding the drawn-off air to the radially internal portion of the downstream face (40) of the impeller, so that this airflows radially from inside to outside along the downstream face of the impeller and mixes with the air taken from the outlet of the compressor in order to reduce the temperature of the air in the annular cavity (41).

2. The turbomachine as claimed in claim 1, **characterized in that** the means for drawing off open into an annular passageway (75) formed around the shaft (20) of the compressor between the air injection means (36) and the annular cavity (41).

3. The turbomachine as claimed in claim 2, wherein the means for drawing off comprise a labyrinth seal (76) that is mounted between the shaft (20) of the compressor and the outlet (62) of the injection means (36) and that regulates the airflow entering the annular passageway (75).

4. The turbomachine as claimed in claim 2 or 3, wherein the annular passageway (75) comprises at the outlet a labyrinth seal (83) for regulating the airflow coming from this annular passageway and entering the annular cavity (41).

5. The turbomachine as claimed in claim 1, wherein the injection means (136) comprise an inlet supplied with air by the diffuser-distributor assembly (12) and two axially opposed outlets (162, 196), one of which opens into a circuit for ventilating the turbine and the other of which opens into the annular cavity (141).

6. The turbomachine as claimed in one of the preceding claims, wherein the annular cavity (41, 141) comprises means (94, 194) for separating and mixing the airflow taken from the air injection means (36, 136) for the ventilation of the turbine and the airflow taken from the outlet of the compressor.

7. The turbomachine as claimed in claim 6, wherein the separation and mixing means comprise a cylindrical metal sheet (94, 194) which extends upstream from a downstream wall delimiting the cavity and which terminates at a distance from the downstream face (40, 140) of the impeller.

## Patentansprüche

1. Turbomaschine mit einer Einheit aus Diffusor-Leitapparat (12), die am Ausgang des Rades (18) eines Zentrifugalverdichters angeordnet ist und eine ringförmige Verbrennungskammer (10) sowie Mittel (36) zum Einspritzen von Belüftungsluft einer Turbine mit Luft versorgt, wobei diese Einheit aus Diffusor-Leitapparat einen stromabwärts gelegenen Flansch (30) aufweist, der an seinem stromabwärts gelegenen Ende mit den Einspritzmitteln verbunden ist und mit der stromabwärts gelegenen Seite (40) des Rades einen ringförmigen Hohlraum (41) zur Zirkulation von Belüftungsluft abgrenzt, die am Ausgang des Verdichters entnommen wird, **dadurch gekennzeichnet, dass** sie Mittel (198) zur Entnahme eines Bruchteils des Belüftungsluftdurchsatzes der Turbine an den Einspritzmitteln (36) sowie Mittel (94, 194) zum Führen der entnommenen Luft bis zu dem radial inneren Teil der stromabwärts gelegenen Seite (40) des Rades aufweist, damit diese Luft radial von innen nach außen entlang der stromabwärts gelegenen Seite des Rades zirkuliert und sich mit der am Ausgang des Verdichters entnommenen Luft mischt, um die Temperatur der Luft in dem ringförmigen Hohlraum (41) zu vermindern.

2. Turbomaschine nach Anspruch 1, **dadurch gekennzeichnet, dass** die Entnahmemitttel in einen ringförmigen Durchgang (75) münden, der um die Welle (20) des Verdichters zwischen den Mitteln (36) zum Einspritzen von Luft und dem ringförmigen Hohlraum (41) ausgebildet ist.

3. Turbomaschine nach Anspruch 2, **dadurch gekennzeichnet, dass** die Entnahmemittel eine Labyrinthdichtung (76) aufweisen, die zwischen der Welle (20) des Verdichters und dem Ausgang (62) der Einspritzmittel (36) angebracht ist und den Durchsatz von Luft regelt, die in den ringförmigen Durchgang (75) eintritt.

4. Turbomaschine nach Anspruch 2 oder 3, **dadurch gekennzeichnet, dass** der ringförmige Durchgang (75) am Ausgang eine Labyrinthdichtung (83) für die Regelung des Durchsatzes von Luft aufweist, die aus diesem ringförmigen Durchgang kommt und in den ringförmigen Hohlraum (41) eintritt.

5. Turbomaschine nach Anspruch 1, **dadurch gekennzeichnet, dass** die Einspritzmittel (136) einen Eingang, der durch die Einheit Diffusor-Leitapparat (12) mit Luft versorgt wird, und zwei axial gegenüberliegende Ausgänge (162, 196) aufweisen, von denen der eine in einen Belüftungskreis der Turbine mündet und der andere in den ringförmigen Hohlraum (141) mündet.

6. Turbomaschine nach einem der vorhergehenden Ansprüche, **dadurch gekennzeichnet, dass** der ringförmige Hohlraum (41, 141) Mittel (94, 194) zum Trennen und Mischen des an den Lufteinspritzmitteln (36, 136) für die Belüftung der Turbine entnommenen Luftdurchsatzes und des am Ausgang des Verdichters entnommenen Luftdurchsatzes aufweist.

7. Turbomaschine nach Anspruch 6, **dadurch gekennzeichnet, dass** die Mittel zum Trennen und Mischen ein zylindrisches Blech (94, 194) aufweisen, das sich nach stromaufwärts von einer stromabwärts gelegenen Wand erstreckt, die den Hohlraum abgrenzt, und im Abstand von der stromabwärts gelegenen Seite (40, 140) des Rades endet.
